# EUROPEAN PATENT APPLICATION

(11) **EP 4 718 053 A1**
(43) Date of publication of application: **01.04.2026**
(21) Application number: 25204916.8
(22) Date of filing: 26.09.2025
(51) Int. Cl.: G01N 1/08

(54) **DEVICE AND METHOD FOR TAKING A SAMPLE FROM A CONTAINER**

(30) Priority: 27.09.2024 BE 202400056
(71) Applicant: C. Steinweg Belgium NV, 2030 Antwerpen (BE)
(72) Inventor: DE PAEP, Michel, 2030 Antwerpen (BE)
(74) Representative: Brantsandpatents bv

(57) **Abstract**

In a first aspect, the invention relates to an apparatus for taking samples from a container, consisting of at least one spear with a pointed tip and an elongated cylindrical body, a drive for moving the spear along its longitudinal direction, and a frame that supports and guides the spear. The spear contains a hollow inner tube and a hollow outer tube that can rotate relative to each other, wherein the inner tube is located at least partially in the outer tube, wherein openings in both tubes can be oriented either overlapping or non-overlapping to form a passage to a hollow space in the spear in which a sample can be received. In a second aspect, the invention describes a method for taking samples from bulk goods in a container, comprising the steps of inserting a spear into the material, rotating the inner and outer tube to create a passage to the hollow space in the spear, and taking a sample via this passage. This method provides for more efficient and accurate sampling, while the structural strength of the spear prevents deformation during use.

## Description

### TECHNICAL FIELD

The invention relates to an apparatus and a method for taking a sample from a container.

### PRIOR ART

Various techniques have been developed for taking samples from freight containers to sample the contents in an efficient and reliable manner. A commonly used technique is the use of manual or automated spears. Manual spears typically consist of a tube with openings that are inserted into the container to collect samples from different layers. This method is effective for smaller containers or less dense materials, but can be unreliable for heavier, compact loads, because the spear cannot be inserted sufficiently deep in such cases.

Additionally, there are vacuum-based sampling devices, whereby materials are sucked from the container by means of negative pressure. This technique is suitable for fine-grained materials such as powders, but quickly becomes clogged with coarser or clumped substances.

CN115950688A and CN118376437A describe sampling systems wherein spears with a mutually rotatable inner and outer tube are inserted into goods to take samples, which are subsequently removed along the inner tube. However, these systems result in a very cumbersome system for removing the samples from the inner tube, and moreover concern an arrangement that takes up a lot of space, which makes them unsuitable for application with containers, and additionally also requires access along the top of the containers, which is incompatible for use at container terminals, where the containers are stacked and the top is not accessible. It is clear that prior art does not allow for providing an efficient system that simply allows sampling from containers.

The present invention aims to solve at least some of the problems mentioned above.

### SUMMARY OF THE INVENTION

In a first aspect, the invention relates to an apparatus suitable for taking a sample from a container, comprising: at least one spear, comprising a pointed tip and an elongated cylindrical body; a drive suitable for moving the spear along its longitudinal direction between a first and a second extreme configuration; a frame suitable for supporting the spear and guiding the spear during movement along its longitudinal direction; characterized in that the spear comprises an at least partially hollow inner tube and a hollow outer tube, wherein the inner tube is located at least partially in the outer tube, which are configured to rotate relative to each other around the longitudinal axis of the spear; and wherein the inner tube and the outer tube comprise one or more openings at at least one common position along the length of the spear to a hollow space in the spear, which openings are positionable in an overlapping or non-overlapping manner via the mutual rotation of the inner tube and the outer tube, wherein they form in an overlapping position a passage on the spear to the hollow space inside the spear.

In a second aspect, the invention relates to a method for taking a sample from a container comprising goods, preferably bulk goods, using at least one spear with a pointed tip and an elongated cylindrical body, wherein the cylindrical body comprises an at least partially hollow inner tube and a hollow outer tube, wherein the inner tube is located at least partially in the outer tube, and wherein the inner tube and the outer tube comprise one or more openings at at least one common position along the length of the spear; wherein the method comprises the steps of: inserting the spear into goods located in a container to be sampled; taking a sample of the goods with the spear; retracting the spear from the container; characterized in that taking a sample of the goods with the spear comprises the steps of: rotating the inner tube and/or the outer tube around the longitudinal axis of the spear until at least one opening in the inner tube and in the outer tube overlap and form a passage to a hollow space in the spear; receiving a sample of the goods surrounding the spear via said passage.

Taking samples from containers is essential for checking the composition, quality and compliance with standards, without having to unload the complete cargo. Deep sampling ensures that samples originate from different layers of the cargo, which provides a representative picture of the total volume. This is important for bulk goods such as coffee beans, rice, grains or minerals, which offer resistance when inserting the spear due to their high density. The use of a spear with an inner and outer tube increases the structural strength, whereby the spear is resistant to the forces that arise when inserting into dense materials, without deformation or damage. This design also makes it possible to take samples by allowing the openings in the inner and outer tube to overlap at specific moments via relative rotation of the inner and outer tube, whereby the sample can fall into the spear. The present apparatus and method simplify the sampling process and improve the quality of the sampling.

### DESCRIPTION OF THE FIGURES

The figures are non-limiting examples illustrating the invention and are not intended to, and should not be construed as limiting the scope of the invention.

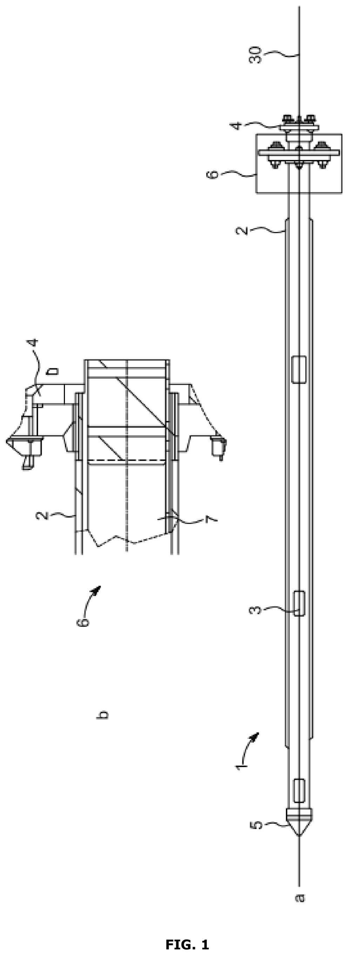

FIG. 1 illustrates a schematic representation of a spear.
FIG. 1 illustrates the different configurations of the inner tube and the outer tube of the spear by means of a cross-section of the spear.
FIG. 3 illustrates a side view of the apparatus.
FIG. 4 illustrates a schematic representation of three side views of a collection element integrated into a piece of frame.
FIG. 5 illustrates an enlarged view of the collection element integrated into a piece of frame in the context of the apparatus.
FIG. 6 illustrates a side view of the apparatus mounted in a container and operating on a container.
FIG. 7 illustrates a top view of the apparatus mounted in a container and operating on a container.
FIG. 8 illustrates a collection element in retracted condition.
FIG. 9 illustrates a collection element in extended condition.

### DETAILED DESCRIPTION

The invention relates to an apparatus and a method for taking a sample from a container.

Unless defined otherwise, all terms used in the description of the invention, including technical and scientific terms, have the meaning commonly understood by the skilled person in the technical field of the invention. For a better understanding of the description of the invention, the following terms are explicitly explained.

As used in this document, the articles "a", "an" and "the" refer to both the singular and the plural unless the context clearly dictates otherwise. For example, "a segment" means one or more segments.

The terms "comprise", "comprising", "consist of", "consisting of", "provided with", "have", "having", "include", "including", "contain", "containing" are synonyms and are inclusive or open terms that indicate the presence of what follows, and which do not exclude or prevent the presence of other components, characteristics, elements, members, steps, as known from or disclosed in the prior art.

The term "sample" or "samples" refers to one or more specimens or test pieces of material from the container, such as raw materials or bulk products, which are collected by the spears for further analysis or processing.

The term "first extreme configuration" refers to the configuration of the apparatus wherein the spears are fully retracted and are located entirely within the volume defined by the frame.

By the term "second extreme configuration" is meant the configuration of the apparatus in which the spears are fully extended and extend as far as possible beyond the volume defined by the frame.

In the present context, the term "sampling" refers to the process whereby a representative sample of the contents of the container is taken by means of a spear.

In a first aspect, the invention relates to an apparatus suitable for taking a sample from a container, comprising: at least one spear, comprising a pointed tip and an elongated cylindrical body; a drive suitable for moving the spear along its longitudinal direction between a first and a second extreme configuration; a frame suitable for supporting the spear and guiding the spear during movement along its longitudinal direction; characterized in that the spear comprises an at least partially hollow inner tube and a hollow outer tube, wherein the inner tube is located at least partially in the outer tube, which are configured to rotate relative to each other around the longitudinal axis of the spear; and wherein the inner tube and the outer tube comprise one or more openings at at least one common position along the length of the spear to a hollow space in the spear, which openings are positionable in an overlapping or non-overlapping manner via the mutual rotation of the inner tube and the outer tube, wherein they form in an overlapping position a passage on the spear to the hollow space inside the spear.

Taking samples from a container is of great importance for checking the contents for composition, quality and compliance with specific standards, without having to unload the entire cargo. To ensure that the samples are representative of the complete contents of the container, it is essential that the spear is inserted deep into the container. This guarantees that the samples originate from different layers and parts of the cargo, whereby a more accurate and reliable representation of the total volume is obtained. Proper sampling prevents inaccurate analyses and helps ensure the quality and safety of the goods.

When taking samples from containers, coarse products such as coffee beans, rice, grains or minerals are often involved. These bulk goods can have a high density and offer much resistance when the spear is inserted into the container. As a result, a considerable amount of force is required to insert the spear deep enough into the cargo for representative sampling. Due to this large force, the spears often become damaged and deformed, making them no longer usable, particularly because the spear must on the one hand be made as narrow as possible to minimize the required force (and also to damage the cargo as little as possible), which very severely limits the structural strength of the spears in the prior art, also because these are typically made completely hollow in order to evacuate the taken samples through the spear during sampling.

Through the use of an inner tube and an outer tube, the structural integrity of the spear is considerably improved, whereby it is resistant to the large forces that act on the spear when it is inserted with the required force into dense or coarse materials in a container. This reinforced construction prevents deformation or damage to the spear during the sampling process. The present spear can be effectively inserted deep into the container, whereby samples can be taken throughout the entire volume of the container so that the required representativeness, and thereby the required accuracy, of the samples is obtained.

Another important advantage is that a spear with an inner tube and outer tube makes it possible to take a sample by allowing the openings in both tubes to overlap at specific moments via rotation around the longitudinal axis of the spear. When the spear is placed in a container and the inner and outer tube are rotated such that their openings overlap, a passage to the hollow space in the inner tube is created. Material can then simply fall through this passage into the spear. This process requires only rotation of the outer and/or inner tube, and by utilizing gravity as well as the large internal pressure in bulk goods to take the sample, equipment for creating suction force is superfluous.

Furthermore, once the sample is taken, the inner and outer tube can be rotated relative to each other so that the openings no longer overlap, whereby the passage is closed and the sample is safely enclosed in the inner tube. This prevents unwanted contamination or mixing of the sample. Moreover, an opening in a spear for taking a sample forms a weak point in the length of the spear, where it can more easily deform or tear when it is inserted into material with force. Through the use of an inner and outer tube, the openings can be rotated away from each other, whereby these weak points are distributed over different parts of the spear. This minimizes the vulnerability of the spear at the locations of the openings.

In a similar manner as when taking a sample, this design also offers an efficient and controlled way to remove the sample from the spear. After the sample has been collected, the openings can be realigned by rotation, so that a passage is created in the bottom of the spear through which the sample can fall out by means of gravity. This process uses the same simple rotation movement whereby no extra mechanical parts are needed to remove the sample from the spear.

In a preferred embodiment, the spear extends substantially horizontally, wherein the openings in overlapping position are substantially vertically oriented. This vertical orientation at overlap guarantees that when taking the sample, when the openings are in overlapping position and typically oriented upward, which offers the advantage that the sample automatically falls 'into' the spear through the openings under the influence of gravity. This is particularly advantageous when removing the collected samples from the spear after withdrawing it, since the openings then align at the underside of the spear. Where the prior art must use a complex tilting mechanism of the spear, to let the samples fall along the length of the spear, or a complex removal mechanism, such as with pistons, etc., in the current embodiment one can again rely on gravity to let the taken samples fall from the spear, through the openings into a collection element.

In an embodiment, at at least one common position along the length of the spear, the inner tube has one opening, and the outer tube has two openings, wherein said two openings are positioned at opposite points in the circumference of the outer tube. When the inner tube is rotated such that the single opening in the inner tube aligns with the upper opening in the outer tube, a passage is created in the top of the spear through which the sample can fall. After collecting the sample, the inner tube can simply be further rotated to close the passage. Subsequently, by further rotating the inner tube, the opening in the inner tube can be aligned with a lower opening in the outer tube. This creates a second passage through which the sample can fall out of the spear. The removed sample can then be collected for analysis. Because the outer tube would experience much friction due to the pressure of the material with which it is surrounded, the great advantage of this design is that only the inner tube needs to be rotated to open or close both the upper and the lower passage. As a result, the sample can be efficiently collected and discharged again, with a single action that requires little force. This simplicity increases the reliability and speed of the sampling process.

In an embodiment, both the inner and outer tube comprise an opening at at least three common mutually different positions along the length of the spear. This design has the advantage that multiple samples can be taken simultaneously with a single insertion into the container. As a result, samples from different layers or parts of the container can be collected, which provides a more representative image of the contents of the container without the spear having to be inserted multiple times. In a further embodiment, said at least three common mutually different positions along the length of the spear are positioned at equal distances from each other. Through this equal distribution, samples can be taken from fixed, consistent intervals within the container, which provides a more representative image of the total contents of the container. This is particularly useful when the contents of the container can vary in composition at different depths.

In an embodiment, the apparatus comprises multiple of the common positions wherein the hollow spaces of each of the common positions are mutually separated. The advantage of this is that the samples can be compartmentalized in a simple manner within the spear. Each sample can be collected separately in a separate hollow space. This makes it possible to keep samples from different depths or positions in the container separated, which is important for accurate analyses of the contents of the container.

In an embodiment, the diameter of the elongated cylindrical body of the spear is at least 20 mm and at most 100 mm. In a further embodiment, the elongated cylindrical body of the spear has a minimum diameter of 30 mm, and preferably a minimum diameter of 40 mm. In a further embodiment, the elongated cylindrical body has a diameter of at most 90 mm, and preferably at most 80 mm, and more preferably at most 70 mm. A spear with a cylindrical body with a larger diameter requires more force to be inserted into material. In contrast, a spear with a smaller diameter deforms more quickly when it is inserted into material with much force. A spear with a cylindrical body with an above-mentioned diameter can be inserted deep into coarse and fine material with the minimum required force, while the diameter is large enough to offer sufficient strength to prevent deformation at this force.

In an embodiment, the spear is supported at at least one point by the frame, wherein said point is at most 30 cm removed from the pointed tip of the spear when it is in first extreme configuration. Because the spear is extended far outside the frame, it is vulnerable to deflection, which can lead to the spear ending up at an angle in the container. This not only hinders accurate sampling, because the spear does not reach the intended location in the container, but also increases the risk of deformation and damage to the spear. By supporting and guiding the spear as far as possible in the direction in which it is extended, it is ensured that the spear moves along a straight path. As a result, the forces are primarily directed along the longitudinal axis of the spear, which prevents deformation and damage. Furthermore, by ensuring that the spear remains stable and straight, it can be extended safely and in a controlled manner over a greater distance, which increases the total reach without the risk of damage or loss of precision.

In an embodiment, the outer diameter of the inner tube substantially corresponds to the inner diameter of the outer tube. As a result, the size of the hollow space within the spear can be optimized and material is prevented from ending up between the inner and outer tube, because the openings in both tubes connect more closely to each other. Moreover, the close-fitting match between the inner and outer tube increases the structural stability of the spear because the risk of deformation or play during use is minimized.

In an embodiment, the openings in the inner and outer tube have a length and/or width of at least 25 mm, preferably at least 35 mm. In a further embodiment, the openings in the inner and outer tube have a length of at least 40 mm, and preferably at least 45 mm, and more preferably at least 50 mm, and more preferably at least 55 mm.

In an embodiment, the openings in the inner and outer tube have a length and/or width of at most 150 mm, preferably at most 130 mm. In a further embodiment, the openings in the inner and outer tube have a length of at most 120 mm, and preferably at most 110 mm, and more preferably at most 100 mm, and more preferably at most 95 mm.

As mentioned earlier, openings in the inner and outer tube form a weak point in the length of the spear, where it can more easily deform during insertion into material. Therefore it is important that the dimensions of these openings are minimized. At the same time, the openings must be large enough to be able to take samples from materials with a wide variety of grain size. The above-mentioned dimensions optimize this balance, whereby the spear is suitable for taking samples from many different materials, without the risk of deformation and/or damage during insertion.

In an embodiment, the outer tube of the spear has a thickness of at least 2 mm, and preferably at least 2.5 mm, and more preferably at least 3 mm. In a further embodiment, the outer tube of the spear has a thickness of at most 10 mm, and preferably at most 8 mm, and more preferably at most 6 mm. If the outer tube is too thin, the spear does not have the strength required to be driven into the material with the necessary force. Conversely, if the wall thickness is too great, the spear becomes heavier, which means that more force is required to operate it effectively. Moreover, a greater thickness of the outer tube leads to a larger diameter of the spear, which increases the friction during insertion into the material and/or reduces the hollow space, whereby the amount of sample that can be taken is limited. A spear with an outer tube according to the mentioned dimensions optimizes the balance between rigidity and ease of operation. The thickness offers sufficient strength to prevent deformation when it is inserted into material with the required force, while the spear remains light enough to keep the required force limited. Moreover, the diameter remains small enough to keep the friction limited and there is sufficient hollow space for a representative sample.

In an embodiment, the frame delimits a beam-shaped volume with a length substantially equal to the length of a spear, wherein parts of the frame in a first and a second plane delimit said length, and wherein the part of the frame in the first plane comprises multiple support points, suitable for supporting and guiding the spear, and wherein different engagement points are provided on the part of the frame in the second plane, which are suitable for engaging a non-pointed end of the spear, and wherein the drive is suitable to move the part of the frame in the second plane toward the first plane through the beam-shaped volume, and wherein the part of the frame in the second plane is guided by the frame when it is moved through the beam-shaped volume.

With the frame described above, multiple spears can be inserted into the material simultaneously, which enables a more accurate analysis of the contents of a container. To the part of the frame in the second plane, multiple spears can be attached, which are then supported and/or guided by the support points in the part of the frame in the first plane. This makes it possible to place multiple spears in parallel within the beam-shaped volume. As a result, the density of the sampling locations in the container can be adjusted to specific application requirements. This thus increases the applicability and the efficiency of the apparatus, as well as the quality of the analysis of the sampling.

In addition, the frame contributes to a more stable insertion of the spears into the material, because the part of the frame in the second plane is guided by the frame. As a result, the spears are accurately moved along their longitudinal direction, which significantly reduces the risk of deformation or damage due to oblique insertion.

The apparatus can, thanks to the beam-shaped frame, be easily anchored in a container, whereby this container itself serves as a mobile platform for the apparatus, and allows it to be easily moved (and the components of the apparatus are protected). Due to the beam shape of the frame, it can be easily attached to the inner walls of the container without extra adaptations to the frame. The apparatus can be safely moved from location to location, without the apparatus having to be reinstalled each time. This makes the apparatus particularly suitable for application in ports, where mobility and speed are crucial. The container with the apparatus can be quickly moved to different loading and unloading locations (instead of bringing the containers to the sampling apparatus), so that samples from multiple containers can be taken efficiently and without delay.

In an embodiment, the apparatus comprises at least one collection element, which comprises a collection opening and a hollow volume, wherein the collection opening is configured to be aligned with a position along the length of the spear where openings in the inner and outer tube are located, and wherein the hollow volume is configured to receive a sample via the collection opening and to retain and/or guide it in the hollow volume. Because the spear is driven with considerable force, it is essential that the collection element does not obstruct this movement. The ability to easily switch the collection elements between an aligned and non-aligned position ensures that the collection element does not interfere with the drive of the spear, which significantly improves the safety and reliability of the system. In a further embodiment, the apparatus comprises a collection element for each position along the length of the spear where the inner and outer tube comprise at least one common opening. These collection elements can then be easily aligned with formed passages in the bottom of the spear whereby all taken samples can be collected at once. In a further embodiment, the collection elements move automatically to a non-aligned configuration when an operator attempts to start the process of sampling and the collection elements are in an aligned configuration. In a further or alternative embodiment, the alignment of the collection elements happens automatically after the spears have been retracted, which simplifies the operation of the apparatus and reduces the chance of errors.

In an embodiment, a collection element comprises multiple collection openings that can be aligned with different passages in the bottom of spears, and wherein a single hollow volume retains or guides the different collected samples. In a further embodiment, the hollow volume inside the collection element is provided with partitions that keep the different collected samples separated during retaining or guiding.

In an embodiment, a collection element is integrated in the part of the frame that supports a spear and the inner and outer tube of the spear comprise a common opening at the position along the length of the spear that aligns with said collection element integrated in the frame when the apparatus is in the first extreme configuration. As a result, the contact points between the spear and the frame are efficiently utilized, whereby the number of required collection elements is reduced and the apparatus is simplified.

In a second aspect, the invention relates to a method for taking a sample from a container comprising goods, preferably bulk goods, using at least one spear with a pointed tip and an elongated cylindrical body, wherein the cylindrical body comprises an at least partially hollow inner tube and a hollow outer tube, wherein the inner tube is located at least partially in the outer tube, and wherein the inner tube and the outer tube comprise one or more openings at at least one common position along the length of the spear; wherein the method comprises the steps of: inserting the spear into goods located in a container to be sampled; taking a sample of the goods with the spear; retracting the spear from the container; characterized in that taking a sample of the goods with the spear comprises the steps of: rotating the inner tube and/or the outer tube around the longitudinal axis of the spear until at least one opening in the inner tube and in the outer tube overlap and form a passage to a hollow space in the spear; receiving a sample of the goods surrounding the spear via said passage.

This method makes it possible to insert a spear into material with a force of at least 5000 N, preferably at least 6000 N, without risk of deformation, whereby it is suitable for a wide variety of materials. Moreover, this method simplifies the sampling process, because the sample can be easily taken by rotating the inner and/or outer tube. The method can therefore be performed by less specialized personnel, and the chance of errors is smaller.

In a preferred embodiment, the spear extends substantially horizontally during the method, and wherein the openings in overlapping position are substantially vertically oriented when taking the sample, preferably wherein the openings in the overlapping position when taking the sample are positioned at the top of the spear and/or when removing the taken samples are positioned at the bottom of the spear.

As noted above, this vertical orientation is advantageous when collecting the samples, as it uses gravity to allow the samples to fall into the spear, and it is especially advantageous during removal, as gravity likewise allows them to fall out of the spear, making a complex removal mechanism unnecessary.

In an embodiment, the method comprises the step of rotating the inner tube and/or the outer tube around the longitudinal axis of the spear until at least one opening in the inner tube and in the outer tube no longer overlap. The sample can be closed off from the rest of the material with a single action, whereby no extra material enters the spear during retraction. This prevents unintended influence on the result of the sample analysis and ensures a more accurate and reliable sampling process.

In an embodiment in which the spear is in a substantially horizontal orientation and has an upper side and a lower side, the method includes the step of removing the collected sample from the spear by rotating the inner and/or outer tube about the longitudinal axis of the spear until at least one opening in the inner tube and in the outer tube overlap and form a passage at the underside of the spear. As mentioned earlier, this step simplifies the removal of the sample from the spear and also the required apparatus.

In an embodiment, only the inner tube is rotated, and the outer tube comprises at least two openings at at least one position along the length of the spear, which openings are positioned at opposite points in its circumference, preferably at the upper side and the lower side of the spear. As mentioned earlier, this step simplifies the sampling process.

In one embodiment, the apparatus comprises at least one collection element with at least one collection opening and a hollow volume, wherein the method further comprises the steps of aligning the at least one collection opening of the collection element with the position along the length of the spear where openings in the inner and outer tube are located by positioning the spear or the collection element, and collecting a sample that has been removed from the spear with the hollow volume of the collection element via the collection opening of the collection element. Through the use of a receiving element to collect the samples, the method becomes simpler because the number of manual actions is reduced. Moreover, the use of collection elements also reduces the chance of errors. The method thereby becomes more systematic and can therefore be performed more consistently.

In what follows, the invention is described by way of non-limiting examples illustrating the invention, and which are not intended to and should not be interpreted as limiting the scope of the invention.

### EXAMPLES

FIG. 1a shows a schematic representation of the spear (1), with which a sample can be taken from the contents of a container (42) by inserting it into the container. The spear (1) has on one side a pointed tip (6), with which it can be easily inserted through the contents of the container (42), and on the other side an engagement point (4) where a drive can be coupled to bring the spear into the container. The body of the spear (1) is cylindrical and consists of an outer tube (2) and an inner tube (7), as shown in FIG. 1b. The inner tube (7) and the outer tube (2) can rotate relative to each other around the longitudinal axis (30) of the spear (1).

The outer tube (2) contains multiple openings (3) at different positions along the length of the spear (1). At common positions, the inner tube (7) has similar openings, which each form a passage to a separate hollow space inside the inner tube (7). Because the openings in the inner tube (7) are located at common positions along the length of the spear as the openings (3) in the outer tube (2), these openings can either overlap or not overlap, depending on how the inner tube (7) and the outer tube (2) are rotated relative to one another. As a result, a passage to the hollow spaces in the inner tube (7) can be opened or closed. To facilitate smooth mutual movement and to prevent material from getting between the inner and outer tube (7, 2), slide bearings can be applied between the inner and outer tube (7, 2) around the openings (3). These slide bearings can be made of, for example, PTFE or polyethylene.

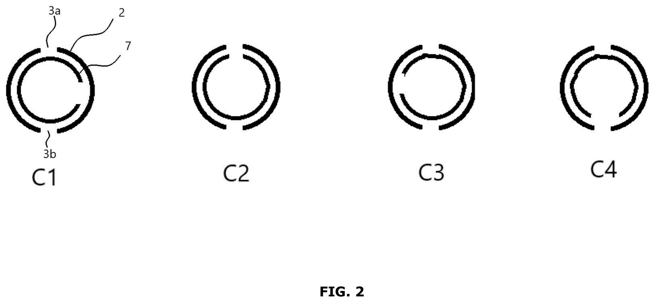

FIG. 2 shows, by means of a cross-section, the different configurations of the inner and outer tube (7, 2) in an embodiment of the spear (1). The inner tube (7) has one opening at different positions, while the outer tube (2) contains two opposite openings in the top and bottom at common positions. During the sampling process, the inner and outer tube (7, 2) assume four different configurations, wherein only the inner tube (7) is rotated.

When the spear (1) is inserted into the container (42), it is in configuration C1, wherein the opening in the inner tube (7) is rotated a quarter turn relative to the openings in the outer tube (2). A sample is taken by rotating the inner tube (7) a quarter turn, whereby the upper opening (3a) of the outer tube (2) overlaps with the opening in the inner tube (7), as shown in configuration C2. By means of gravity, the sample falls via the formed passage (31) into the hollow space of the inner tube (7).

Subsequently, the passage (31) is closed by rotating the inner tube (7) again a quarter turn, so that configuration C3 is reached. Now the spear (1) can be safely withdrawn from the container (42) without material unintentionally ending up in the inner tube (7). After withdrawing the spear (1), the taken sample can be removed by rotating the inner tube (7) once more a quarter turn, so that the lower opening (3b) in the outer tube (2) overlaps with the opening in the inner tube (7), as shown in configuration C4. The sample then falls through the formed passage (32) out of the inner tube (7) and can be collected for analysis.

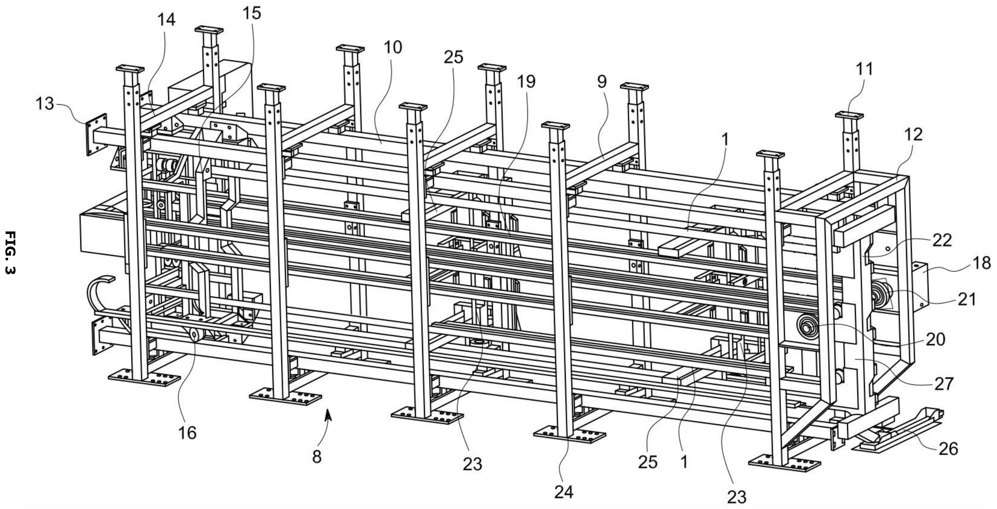

FIG. 3 shows an embodiment wherein the apparatus comprises three spears (1), which are placed parallel, substantially horizontally and one above the other in a frame (8). The spears (1) can in an alternative embodiment also be positioned alongside each other, or be arranged in a grid of n x m spears (1). The frame (8) of the apparatus comprises multiple uprights (9). These uprights (9) are provided with mounting plates (11) at the top and bottom, which are suitable for attachment to the inside of a container (42). Various beams (10) are attached to the uprights (9) The beams are also provided with mounting plates (13) for mounting to the inside of the container. The uprights (9) and the beams (10) together define a beam-shaped volume, of which the length is at least greater than the length of the spear (1), so that the spear can be stored within this volume. FIG. 3 shows the apparatus in a first extreme configuration, wherein the spears (1) are located completely within the beam-shaped volume.

At the front (12) of the frame (8), different support points (22) are arranged along a vertical direction, which are designed to support and guide the spear (1) when it is moved in its longitudinal direction and is inserted into a container (42). The engagement point on the other side of the spear (1) is connected to a drive frame (17). This drive frame (17) is operationally connected to a drive (18) and is configured to push the spear along its longitudinal direction out of the beam-shaped volume of the frame (8). During this movement, the drive frame (17) is guided from the rear upright (14) to the front (12) of the frame (8).

The drive frame (17) moves along four beams (10), which form the corners of the beam-shaped volume. The drive frame (17) is provided with wheels (16) at the four corners, while the beams (10) are equipped with rails that are suitable for guiding said wheels (16). The drive frame (17) can, however, also be movably connected to the frame (8) via linear guides or slide bearings. In an alternative embodiment, the drive frame (17) is guided by a central shaft that runs through the center of the beam-shaped volume.

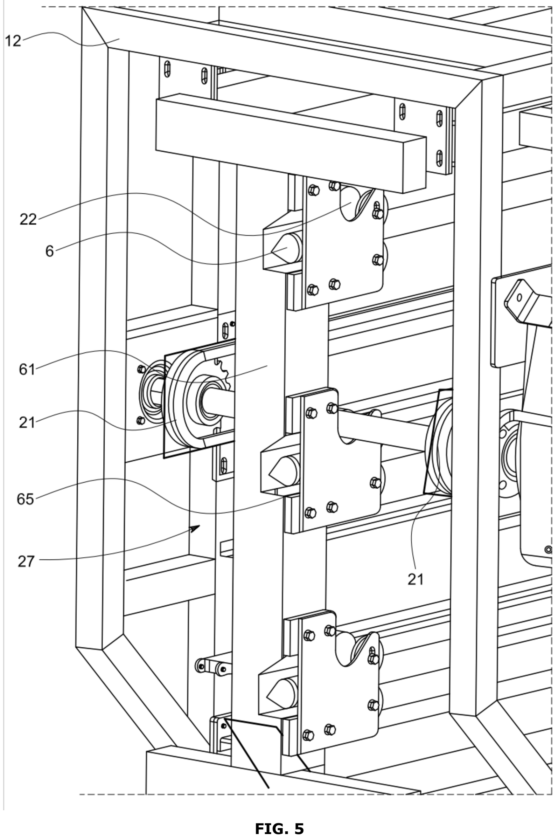

In this embodiment, the drive frame (17) is moved by means of a drive (18), which pulls the drive frame (17) through the beam-shaped volume via belts (19). However, chains can also be used for this purpose. On both sides of the frame (8) a belt (19) is tensioned, as can also be seen in FIG. 5, wherein the ends are connected to each other so that an endless loop is created. These belts (19) are tensioned (21) over a shaft at the front (20) and a shaft at the rear of the frame (not shown). At one point in the loop, the two belts (19) are attached to two opposite sides of the drive frame (17). The drive frame (17) can, however, also be driven by a single endless loop that runs through the center of the frame and engages at the center of the drive frame (17).

The shaft at the front of the frame (20) is connected to the drive (18). This drive could, however, also be connected to the shaft at the other side of the frame. By rotating the shaft (20), the belts (19) are rotated in one direction or the other, whereby the drive frame (17) is pulled toward the front (12) or the rear of the frame (8). When the drive frame (17) is pulled toward the front (12), it pushes the spears (1) outward from the beam-shaped volume. To retract the spears (1) again, the shaft (20) is rotated in the opposite direction, whereby the drive frame (17) moves toward the rear of the frame (8), until the spears (1) are again located completely within the beam-shaped volume of the frame (8), as shown in FIG. 3.

When the spears have taken a sample between insertion and retraction, different collection elements (23) can be placed between the frame (8), so that under each opening in the spears a collection opening (25) is aligned. As a result, the samples which are removed from the spears (1), can be collected. Before the spears (1) are inserted into a container (42) again, the collection elements (23) or only the collection openings (25) must be retracted in order not to obstruct the movement of the drive frame (17). In this embodiment, collection elements are integrated in the vertical part of the frame (27) at the front of the frame (12), where the support points (22) are also provided, to collect the samples that are taken at the front of the spears (1). These samples are then guided to a sample container (26) that is suitable for temporarily retaining them.

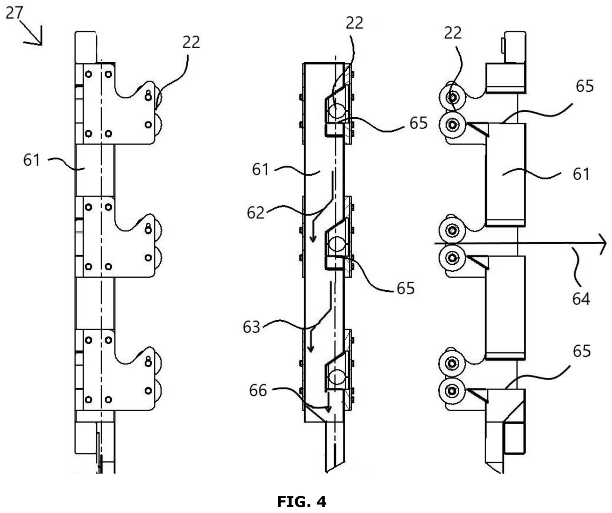

The collection element (27) integrated in the frame is shown in more detail in FIG. 4. In this example, the support points (22) are configured in the form of two wheels placed one above the other, between which a spear (1) moves. The wheels comprise a V-shaped curved surface between which the spear (1) is clamped. The arrow (64) indicates how a spear (1) is oriented relative to the integrated collection element (27). When the spear (1) is moved into or out of the container, the wheels guide and support the spear (1) by rolling along its length when it moves along its longitudinal direction. Below each set of two wheels is a collection opening (65), which is aligned with an opening (3) in the spear. When the sample is removed from the spear by rotating the inner and/or outer tube (7, 2), it falls downward and is collected in a hollow volume (61) within the integrated collection element (27). Within this hollow volume, the samples from the upper, middle and lower spear (1) are guided downward, as indicated by the arrows (62, 63, 66) respectively. Possibly the hollow volumes (61) can be provided with partitions to keep the samples from the different spears (1) separated.

Instead of wheels, the support points (22) can be configured as slide bushings or linear bearings, which provide low friction and stable guiding of the spear (1). Furthermore, the support points can also be configured as V-shaped guides, which also both support and guide the spear (1).

FIG. 5 shows an enlarged view of the integrated collection element (27) in the context of the frame (8). The integrated collection element (27) is perpendicular to, and runs along the center of, the shaft at the front of the frame (20). For each spear (1), a collection opening (65) is aligned with an opening (3b) in the outer tube 2 of the spear (1). The collection openings (65) lead to a hollow volume (61), which is suitable for guiding collected samples downward. The support points (22) are placed as far as possible at the front of the frame (8) to guide the spear (1) more effectively in a straight line, thereby preventing the spear (1) from being inserted obliquely into the container (42), which could lead to deformation of the spear (1). Furthermore, FIG. 5 shows more clearly how on both sides of the frame a belt is tensioned around the shaft 20.

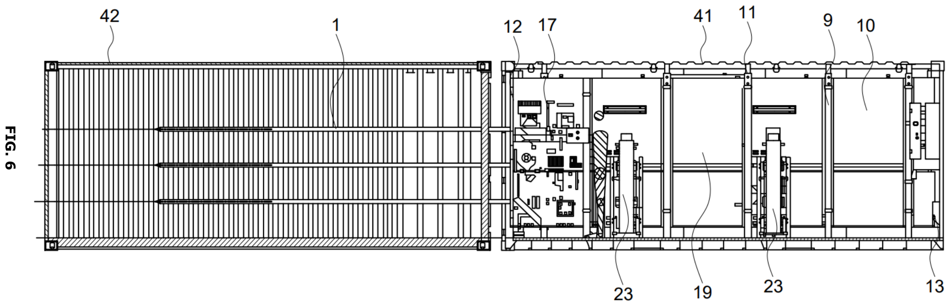

FIG. 6 shows a side view of the apparatus, mounted in a container (41) by means of mounting plates (11, 13), which is placed at the end face of a second container (42) to take a sample. In FIG. 6 it can be seen how the spears (1) are inserted at three different heights into the second container (42).

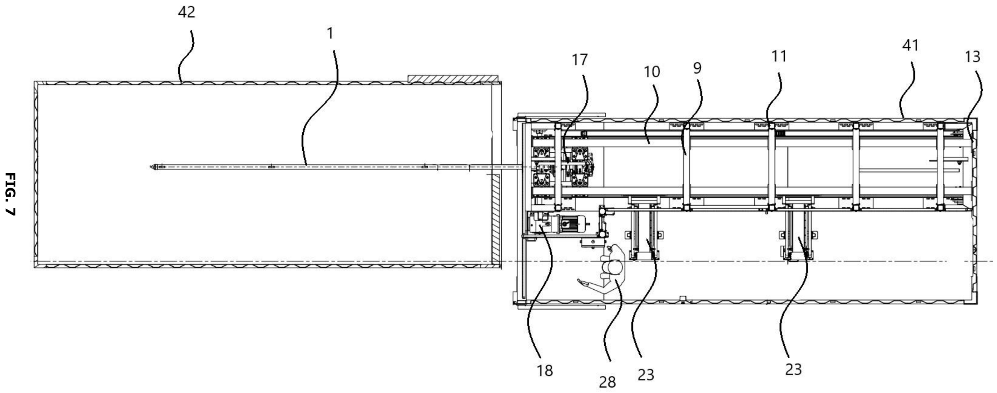

FIG. 7 shows, by means of a top view, how the apparatus is positioned along a different axis than the container (42), so that the spears (1) are inserted exactly through the center of the container (42). The spears (1) are extended to their maximum extent, and FIG. 7 therefore shows the apparatus in the second extreme configuration. Because the apparatus is mounted in container (41), it can be flexibly placed depending on the requirements of the situation. Furthermore, FIG. 7 shows that the apparatus is small enough to leave room inside the container (41) for an operator (28) who can operate the apparatus.

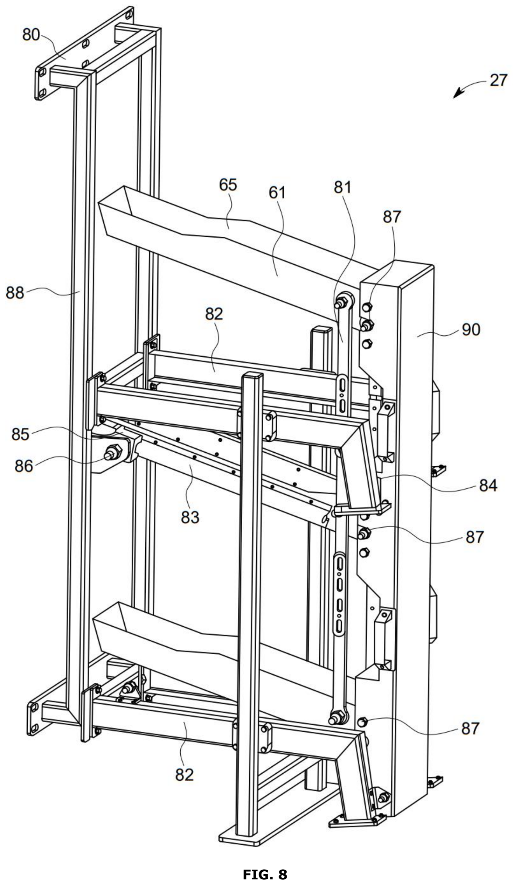

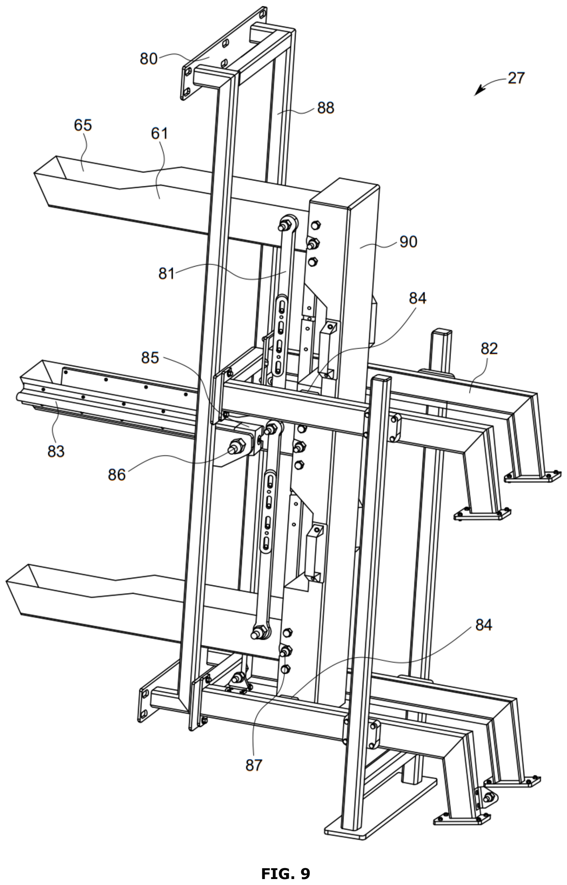

FIG. 8 shows a collection element (27) with three collection openings (65) positioned one above the other and hollow volumes (61) in the form of three bins (61, 65), which are connected via a hinge point (87) to a standing base (90). The three bins (61, 65) are slidably suspended on a frame (88) by means of different guides (82) on opposite sides. The standing base (90) is guided along said guides (82) by means of different protruding sliding pieces (84) that are arranged on the sides of the standing base (90). The frame (88) can be anchored via a mounting plate (80) at the top and bottom of the frame (88). A brace (81) synchronizes the hinge movement of the three bins (61, 65), so that all three bins are held upright by the hinge point (86), with which the end of the middle bin is connected to the frame (88). By means of a rail (83) on the side of the middle bin, and a runner (85) that runs over said rail (83) and is hingedly connected to the hinge point (86), the bins (61, 65) are brought into a substantially horizontal orientation when the standing base (90) is pushed forward along the guides (82), as can be seen in FIG. 9, where the collection element (27) is shown in an extended state. By extending the bins (61, 65), the collection openings (65) for three spears (1) positioned one above the other can be aligned with the location where a passage in the bottom of the spear (1) can be formed by rotating the inner and/or outer tube (7, 2). In this way the taken sample can be collected in the corresponding bin (61, 65). When the spears (1) subsequently have to be inserted into the container again, the bins (61, 65) can be retracted, so that they do not obstruct the drive frame (17).

## Claims

1. An apparatus suitable for taking a sample from a container, comprising:
- at least one spear, comprising a pointed tip and an elongated cylindrical body;
- a drive suitable for moving the spear along its longitudinal direction between a first and a second extreme configuration;
- a frame suitable for supporting the spear and guiding the spear during movement along its longitudinal direction;
- **characterized in that** the spear comprises an at least partially hollow inner tube and a hollow outer tube, wherein the inner tube is located at least partially in the outer tube, which are configured to rotate relative to each other around the longitudinal axis of the spear; and wherein the inner tube and the outer tube comprise one or more openings at at least one common position along the length of the spear to a hollow space in the spear, which openings are positionable in an overlapping or non-overlapping manner via the mutual rotation of the inner tube and the outer tube, wherein they in an overlapping position form a passage on the spear to the hollow space inside the spear, wherein the spear extends substantially horizontally, and wherein the openings in overlapping position are substantially vertically oriented.

2. The apparatus according to claim 1, wherein at the at least one common position along the length of the spear the inner tube comprises one opening and the outer tube comprises two openings, wherein said two openings are positioned at opposite points in the circumference of the outer tube.

3. The apparatus according to any one of the preceding claims, wherein at at least three mutually different common positions along the length of the spear the inner and outer tube comprise at least one opening.

4. The apparatus according to any one of the preceding claims, wherein the apparatus comprises multiple of the common positions, and wherein the hollow spaces of each of the common positions are mutually separated.

5. The apparatus according to any one of the preceding claims wherein the diameter of the elongated cylindrical body of the spear is at least 20 mm and at most 100 mm.

6. The apparatus according to any one of the preceding claims, wherein the outer diameter of the inner tube substantially corresponds to the inner diameter of the outer tube.

7. The apparatus according to any one of the preceding claims, wherein the openings in the inner and outer tube have a length and/or width of at least 25 mm, preferably at least 35 mm, and/or have a length and/or width of at most 150 mm, preferably at most 130 mm.

8. The apparatus according to any one of the preceding claims, wherein the frame delimits a beam-shaped volume with a length substantially equal to the length of a spear, and wherein parts of the frame in a first and a second plane delimit said length, wherein the part of the frame in the first plane comprises multiple support points, suitable for supporting and guiding the spear, and wherein different engagement points are provided on the part of the frame in the second plane, which are suitable for engaging a non-pointed end of the spear, and wherein the drive is suitable to move the part of the frame in the second plane toward the first plane through the beam-shaped volume, and wherein the part of the frame in the second plane is guided by the frame when it is moved through the beam-shaped volume.

9. The apparatus according to any one of the preceding claims, further comprising at least one collection element, which comprises a collection opening and a hollow volume, wherein the collection opening is configured to be aligned with a position along the length of the spear where openings in the inner and outer tube are located, and wherein the hollow volume is configured to receive a sample via the collection opening and to retain and/or guide it in the hollow volume.

10. The apparatus according to claim 9, wherein at least one collection element is provided in the frame at a point where the frame supports the spear, and wherein the inner and outer tube along the length of the spear comprise at least one opening at the position that aligns with the point where the frame supports the spear when the spear is in the first extreme configuration.

11. A method for taking a sample from a container comprising goods, preferably bulk goods, using at least one spear with a pointed tip and an elongated cylindrical body, wherein the cylindrical body comprises an at least partially hollow inner tube and a hollow outer tube, wherein the inner tube is located at least partially in the outer tube, and wherein the inner tube and the outer tube comprise one or more openings at at least one common position along the length of the spear; wherein the method comprises the steps of:
- inserting the spear into goods that are located in a container to be sampled;
- taking a sample of the goods with the spear;
- retracting the spear from the container;
**characterized in that** taking a sample of the goods with the spear comprises the steps of:
- rotating the inner tube and/or the outer tube around the longitudinal axis of the spear until at least one opening in the inner tube and in the outer tube overlap and form a passage to a hollow space in the spear;
- receiving a sample of the goods surrounding the spear via said passage,
wherein the spear extends substantially horizontally during the method, and wherein the openings in overlapping position are substantially vertically oriented when taking the sample, preferably wherein the openings in the overlapping position when taking the sample are positioned at the top of the spear.

12. The method according to claim 11, further comprising the step of rotating the inner tube and/or the outer tube around the longitudinal axis of the spear until at least one opening in the inner tube and in the outer tube no longer overlap after taking the sample of the goods.

13. The method according to any one of claims 11 or 12, wherein the spear is in a substantially horizontal orientation and comprises a top side and bottom side, and further comprising the step of removing the taken sample from the spear by rotating the inner tube and/or the outer tube around the longitudinal axis of the spear until at least one opening in the inner tube and in the outer tube overlap and form a passage at the bottom side of the spear.

14. The method according to any one of claims 11 to 13, wherein only the inner tube is rotated, and wherein the outer tube comprises at at least one position along the length of the spear two openings that are positioned at opposite points in its circumference, preferably at the upper side and at the lower side of the spear.

15. The method according to any one of claims 11 to 14 wherein the apparatus comprises at least one collection element with at least one collection opening and a hollow volume, wherein the method further comprises the steps of
- aligning the at least one collection opening of the collection element with the position along the length of the spear where openings in the inner and outer tube are located by positioning the spear and/or the collection element;
- collecting a sample that has been removed from the spear with the hollow volume of the collection element via the collection opening of the collection element.
